# EUROPÄISCHE PATENTANMELDUNG

(11) **EP 3 132 989 A1**
(43) Veröffentlichungstag der Anmeldung: **22.02.2017**
(21) Anmeldenummer: 15465529.4
(22) Anmeldetag: 19.08.2015
(51) Int. Cl.: B60W 50/14, B60W 50/00, B60W 10/06

(54) **VERFAHREN ZUR REDUKTION DES KRAFTSTOFFVERBRAUCHS EINES KRAFTFAHRZEUGS**

(71) Anmelder: Continental Automotive GmbH, 30165 Hannover (DE)
(72) Erfinder: Pascu, Cosmin, 307160 Dumbravita (RO); Zaslo, Cristian, 300687 Timisoara (RO)

(57) **Zusammenfassung**

Die Erfindung betrifft ein Verfahren zur Reduzierung des Kraftstoffverbrauchs eines durch einen Verbrennungsmotor angetriebenen Kraftfahrzeugs, wobei das Kraftfahrzeug einen Kraftstofftank zur Bevorratung von Kraftstoff aufweist und eine Vorrichtung zum Erfassen der im Kraftstofftank befindlichen Kraftstoffmenge, wobei die nachfolgenden Schritte durchlaufen werden:
▪ Erfassen der verbleibenden Kraftstoffmenge im Kraftstofftank,
▪ Abgleichen mit einer vorgebbaren Mindestmenge für Kraftstoff im Kraftstofftank,
▪ Ausgeben einer Meldung zur Signalisierung der Unterschreitung der Mindestkraftstoffmenge im Kraftstofftank, und
▪ manuelles und/oder automatisches Aktivieren eines Kraftstoffsparmodus bei Unterschreiten der vorgegebenen Mindestmenge im Kraftstofftank.

## Beschreibung

### Technisches Gebiet

Die Erfindung betrifft ein Verfahren zur Reduzierung des Kraftstoffverbrauchs eines durch einen Verbrennungsmotor angetriebenen Kraftfahrzeugs, wobei das Kraftfahrzeug einen Kraftstofftank zur Bevorratung von Kraftstoff aufweist und eine Vorrichtung zum Erfassen der im Kraftstofftank befindlichen Kraftstoffmenge.

### Stand der Technik

Die Reichweite von verbrennungsmotorisch angetriebenen Kraftfahrzeugen wird im Wesentlichen durch die Menge des im Kraftstofftank mitgeführten Kraftstoffs bestimmt. Die aktuell verfügbare Kraftstoffmenge wird in Kraftfahrzeugen oftmals über ein Anzeigenelement im Inneren des Kraftfahrzeugs angezeigt. Sofern eine vorgegebene Mindestmenge unterschritten wird, wird dem Fahrer dies durch eine Warnmeldung angezeigt. Der Kraftstoffverbrauch wird durch die Ausgabe der Warnmeldung jedoch nicht verändert. Dies ist nachteilig, da keine Vorkehrungen zur aktiven Reduzierung des Kraftstoffverbrauchs getroffen werden und somit keine Optimierung der Reichweite erreicht wird.

### Darstellung der Erfindung, Aufgabe, Lösung, Vorteile

Daher ist es die Aufgabe der vorliegenden Erfindung ein Verfahren zu schaffen, welches eine Reduzierung des momentanen Kraftstoffverbrauchs von Kraftfahrzeugen bei Unterschreiten einer vorgebbaren Kraftstoffmindestmenge im Kraftstofftank erlaubt.

Die Aufgabe hinsichtlich des Verfahrens wird durch ein Verfahren mit den Merkmalen von Anspruch 1 gelöst.

Ein Ausführungsbeispiel der Erfindung betrifft ein Verfahren zur Reduzierung des Kraftstoffverbrauchs eines durch einen Verbrennungsmotor angetriebenen Kraftfahrzeugs, wobei das Kraftfahrzeug einen Kraftstofftank zur Bevorratung von Kraftstoff aufweist und eine Vorrichtung zum Erfassen der im Kraftstofftank befindlichen Kraftstoffmenge, wobei die nachfolgenden Schritte durchlaufen werden:
▪ Erfassen der verbleibenden Kraftstoffmenge im Kraftstofftank,
▪ Abgleichen mit einer vorgebbaren Mindestmenge für Kraftstoff im Kraftstofftank,
▪ Ausgeben einer Meldung zur Signalisierung der Unterschreitung der Mindestkraftstoffmenge im Kraftstofftank, und
▪ manuelles und/oder automatisches Aktivieren eines Kraftstoffsparmodus bei Unterschreiten der vorgegebenen Mindestmenge im Kraftstofftank.

Der Füllstand im Kraftstofftank kann unter der Zuhilfenahme von bekannten Vorrichtungen erfasst werden. Dabei kann der Füllstand beispielsweise unter Zuhilfenahme eines Ultraschallsensors erfasst werden oder durch einen Tankgeber, der mittels eines Schwimmkörpers und eines Gestänges über einen Positionssensor den Füllstand ermittelt.

Das Signal bezüglich der Unterschreitung der Kraftstoffmindestmenge kann sowohl optisch als auch akustisch sein. Auch eine Kombination ist vorsehbar, um sicherzustellen, dass der Fahrer das Signal wahrnimmt. Beispielsweise ist neben dem Aufleuchten einer Signallampe auch eine Meldung auf einem Display im Blickfeld des Fahrers vorsehbar. Insbesondere in Verbindung mit einem in Kraftfahrzeugen oftmals eingesetzten Kombiinstrument zur Anzeige der Geschwindigkeit und anderer relevanter Informationen kann eine einfache und sichere Benachrichtigung des Fahrers sichergestellt werden.

Das Aktivieren des Kraftstoffsparmodus kann wahlweise manuell durch eine Bestätigung des Fahrers erfolgen oder vollautomatisch beim Erreichen der Mindestkraftstoffmenge. Dies kann beispielsweise auch abhängig von einem vom Fahrer ausgewählten Betriebsmodus des Kraftfahrzeugs erfolgen. Wenn der Fahrer beispielsweise eine sportliche Fahrzeugabstimmung über das Bordmenü auswählt, könnte die Aktivierung ausschließlich manuell durch das Bestätigen des Fahrers erfolgen. In einem anderen Fall könnte bei ausgewähltem Economy-Modus, der regelmäßig gewählt wird um einen geringen Verbrauch zu erzielen, die Aktivierung des Kraftstoffsparmodus automatisch erfolgen. Auch Kombinationen der automatischen und manuellen Aktivierung mit unterschiedlichen Betriebsmodi des Kraftfahrzeugs sind vorsehbar.

Besonders vorteilhaft ist es, wenn der Kraftstoffsparmodus das Reduzieren der Klimaanlagenleistung und/oder das Schließen der Fenster und/oder das Deaktivieren von elektrischen Verbrauchern und/oder das Reduzieren der Antriebsleistung des Verbrennungsmotors umfasst.

Die zuvor genannten Vorgänge dienen insbesondere dazu, den momentanen Kraftstoffverbrauch so weit wie möglich zu reduzieren. Durch das Schließen der Fenster und insbesondere des Schiebedachs, sofern ein Schiebedach vorhanden ist, wird die Aerodynamik des Fahrzeugs verbessert, wodurch der Luftwiderstand und somit der Kraftstoffverbrauch sinkt. Das Deaktivieren von elektrischen Verbrauchern entlastet den Verbrennungsmotor, da von der Lichtmaschine weniger mechanische Energie in elektrische Energie umgewandelt werden muss. Dies ist auch hilfreich für die Senkung des Kraftstoffverbrauchs. Auch eine Reduktion der Leistung der Klimaanlage reduziert die Belastung des Verbrennungsmotors erheblich, wodurch der Kraftstoffverbrauch sinkt.

Es ist auch möglich nur einzelne dieser Maßnahmen vorzusehen, die beispielsweise in einem Unterpunkt des Bordmenüs durch den Fahrer im Vorfeld oder dynamisch währenddessen der Kraftstoffsparmodus aktiviert ist ausgewählt werden können. Die Effektivität des Kraftstoffsparmodus wird dabei zugunsten des vom Fahrer gewünschten Mindestkomforts angepasst.

Auch ist es vorteilhaft, wenn durch eine Rückmeldung des Fahrers das Aktivieren des Kraftstoffsparmodus dauerhaft oder über einen vorgebbaren Zeitraum unterdrückt wird.

Sofern der Fahrer das Aktivieren des Kraftstoffsparmodus nicht wünscht, kann er mittels einer Rückmeldung, die beispielsweise durch einen Tastendruck stattfinden kann, die Aktivierung zeitlich verschieben oder dauerhaft unterdrücken. Dies ist beispielsweise notwendig, wenn der Fahrer auch weiterhin die maximale Leistungsfähigkeit des Fahrzeugs bei maximalem Komfort wünscht.

Ein bevorzugtes Ausführungsbeispiel ist dadurch gekennzeichnet, dass das Kraftfahrzeug beim Aktivieren des Kraftstoffsparmodus automatisch in die verbrauchsgünstigste Betriebsart überführt wird, wobei die Fahrwerksabstimmung und/oder die Schaltcharakteristik des Getriebes und/oder die Kennlinie des Gaspedals und/oder die Leistungsentfaltung des Verbrennungsmotors angepasst werden.

Moderne Kraftfahrzeuge weisen regelmäßig unterschiedliche Betriebsmodi auf, die beispielsweise einen besonders komfortablen, einen besonders sportlichen oder einen besonders verbrauchsoptimierten Betrieb des Kraftfahrzeugs zulassen. Im Rahmen des Kraftstoffsparmodus kann das Kraftfahrzeug derart abgestimmt werden, dass eine maximal mögliche Reduktion des Kraftstoffverbrauchs erreicht wird. Hierzu können insbesondere die Schaltcharakteristik eines Automatikgetriebes, die Kennlinie eines Gaspedals oder die dem Betrieb zugrundeliegenden Kennfelder des Verbrennungsmotors angepasst werden.

Auch ist es zu bevorzugen, wenn nach Aktivierung des Kraftstoffsparmodus ein teilautonomer Fahrbetrieb aktiviert wird, wobei insbesondere das Beschleunigen und das Abbremsen vom Kraftfahrzeug vorgegeben werden.

Ein teilautonomer Betrieb kann vorteilhaft sein, um den Kraftstoffverbrauch noch weiter zu reduzieren. Hierzu kann das Kraftfahrzeug beispielsweise Topographiedaten aus dem Navigationsgerät beziehen und eine möglichst günstige Gangvorwahl treffen und die Beschleunigung und das Abbremsen außer an den restlichen Verkehr auch an die vor dem Kraftfahrzeug liegende Strecke anpassen. Hierzu ist es besonders vorteilhaft, wenn neben einem Navigationsgerät auch andere Sensoren im Kraftfahrzeug verbaut sind, die ein eigenständiges Beschleunigen und Abbremsen unter Berücksichtigung der direkten Verkehrslage, welche um das Kraftfahrzeug herum herrscht, ermöglichen.

Darüber hinaus ist es vorteilhaft, wenn die in einem Navigationsgerät ausgewählte Route beim Aktivieren des Kraftstoffsparmodus automatisch derart angepasst wird, dass die verbrauchsgünstigste Route gewählt wird. Durch ein Koppeln des Kraftstoffsparmodus mit einer möglichst verbrauchsarmen Route kann die Kraftstoffeinsparung maximiert werden. Oftmals bieten moderne Navigationsgeräte neben einer besonders schnellen Route auch eine besonders verbrauchsgünstige Route an.

Weiterhin ist es vorteilhaft, wenn in eine im Navigationsgerät gewählte Fahrroute beim Aktivieren des Kraftstoffsparmodus automatisch die nächstgelegene Tankstelle integriert wird oder als optionale Empfehlung ausgegeben wird. Dies ist besonders vorteilhaft, um dem Fahrer ohne Aufwand von seiner Seite eine möglichst optimale Tankstelle anzubieten. Möglichst optimal ist eine Tankstelle dabei, wenn sie möglichst nahe an der vorgewählten Route liegt und mit dem noch zur Verfügung stehenden Kraftstoff erreichbar ist.

Auch ist es zweckmäßig, wenn der Kraftsparmodus nach einer vorgebbaren Anzahl von manuellen Unterdrückungen durch den Fahrer beim Erreichen einer zweiten vorgebbaren Kraftstoffrestmenge im Kraftstofftank automatisch aktiviert wird. Dies ist vorteilhaft, um sicherzustellen, dass auch bei einem einfachen oder mehrfachen manuellen Unterdrücken des Kraftstoffsparmodus durch den Fahrer, spätestens beim Erreichen einer vorgebbaren Kraftstoffrestmenge, die bevorzugt wesentlich kleiner ist als die Kraftstoffmenge, die zur Aussendung des Signals zur Aktivierung des Kraftstoffsparmodus führt, aktiviert wird. So kann sichergestellt werden, dass der Kraftstofftank nicht ohne zumindest eine zeitweise Aktivierung des Kraftstoffsparmodus leer gefahren werden kann.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von Ausführungsbeispielen unter Bezugnahme auf die Zeichnungen detailliert erläutert. In den Zeichnungen zeigen:
- Fig. 1: ein Blockschaltbild zur Verdeutlichung des erfindungsgemäßen Verfahrens, und
- Fig. 2: ein Blockschaltbild mit einer erweiterten Ausführung des erfindungsgemäßen Verfahrens.

### Bevorzugte Ausführung der Erfindung

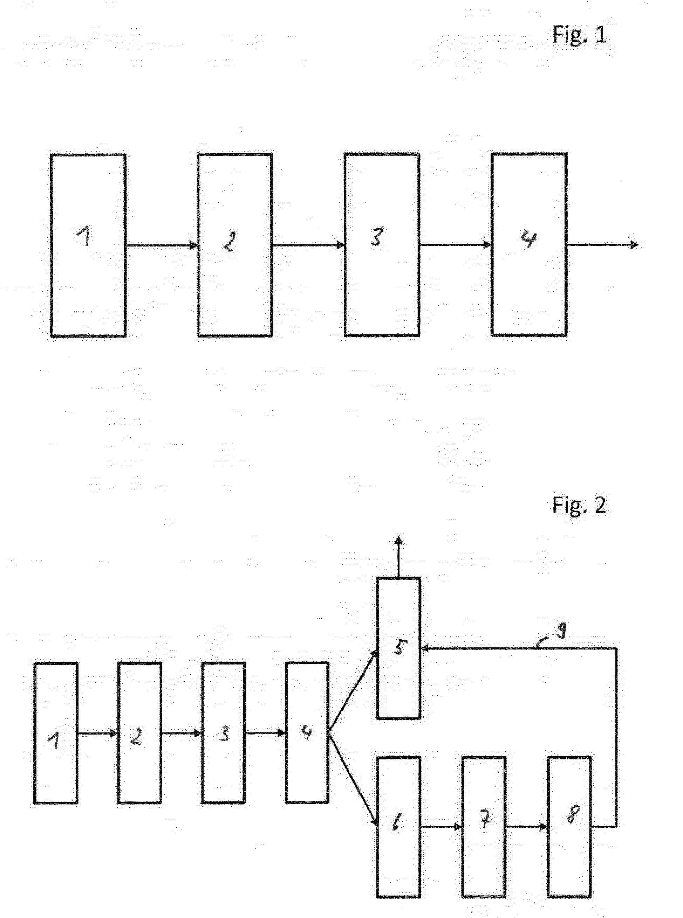

Die Figur 1 zeigt ein Blockschaltbild zur Verdeutlichung des erfindungsgemäßen Verfahrens. Im Block 1 wird die noch im Kraftstofftank befindliche Kraftstoffmenge ermittelt. Dies kann unter Zuhilfenahme von bekannten hierfür einsetzbaren Vorrichtungen erfolgen. In Block 2 wird ein Abgleich der ermittelten Kraftstoffmenge im Kraftstofftank mit einer vorgebbaren Mindestmenge vorgenommen. Die Erfassung des Kraftstoffs im Kraftstofftank und der Abgleich mit einer vorgebbaren Mindestmenge kann fortlaufend durchgeführt werden. Auch ist es möglich diese beiden Schritte regelmäßig nach Ablauf einer bestimmten Zeitdauer durchzuführen.

Sofern der im Kraftstofftank befindliche Kraftstoff weniger ist, als die vorgegebene Mindestmenge, wird in Block 3 ein optisches und/oder ein akustisches Signal an den Fahrer ausgegeben.

In Block 4 wird schließlich der Kraftstoffsparmodus manuell oder automatisch aktiviert.

Die Figur 2 zeigt ein weiteres Blockschaltbild, wobei der Aufbau des linken Bereichs der Figur 2 dem der Figur 1 entspricht. Im Block 4 wird der Kraftstoffsparmodus entweder automatisch oder manuell aktiviert. Im Falle einer automatischen Aktivierung oder einer manuellen Aktivierung folgt Block 5, der für den aktivierten Kraftstoffsparmodus steht.

Sofern keine automatische oder manuelle Aktivierung in Block 4 erfolgt, wird in Block 6 erneut die noch vorhandene Kraftstoffmenge mit einer Mindestmenge verglichen. Diese im Block 6 verwendete Mindestmenge liegt vorzugsweise unter der in Block 2 herangezogenen Mindestmenge. Vorteilhafterweise ist die Mindestmenge in Block 6 so dimensioniert, dass noch eine von der Reichweite her vorgebbare Notfahrstrecke zurückgelegt werden kann, um beispielsweise eine Tankstelle zu erreichen. Die im Block 6 verwendete Mindestmenge kann fix sein oder aufgrund des momentanen Verbrauchs und beispielsweise der momentanen Entfernung zur nächsten Tankstelle bestimmt werden. Dabei sollte der noch zur Verfügung stehende Kraftstoff mindestens zum Erreichen der nächsten Tankstelle ausreichen.

In Block 7 und 8 wird beispielhaft weiter ein Abgleich der noch zur Verfügung stehenden Kraftstoffmenge mit der in Block 6 verwendeten Mindestmenge durchgeführt. Wenn schließlich die absolute Mindestmenge erreicht ist, wird letztlich über eine Rückführung entlang des Pfeils 9 im Block 5 der Kraftstoffsparmodus aktiviert.

Die unterschiedlichen Merkmale der einzelnen Ausführungsbeispiele können auch untereinander kombiniert werden. Die Ausführungsbeispiele der Figuren 1 und 2 weisen insbesondere keinen beschränkenden Charakter auf und dienen der Verdeutlichung des Erfindungsgedankens.

## Patentansprüche

1. Verfahren zur Reduzierung des Kraftstoffverbrauchs eines durch einen Verbrennungsmotor angetriebenen Kraftfahrzeugs, wobei das Kraftfahrzeug einen Kraftstofftank zur Bevorratung von Kraftstoff aufweist und eine Vorrichtung zum Erfassen der im Kraftstofftank befindlichen Kraftstoffmenge, **dadurch gekennzeichnet, dass** die nachfolgenden Schritte durchlaufen werden:
▪ Erfassen der verbleibenden Kraftstoffmenge im Kraftstofftank,
▪ Abgleichen mit einer vorgebbaren Mindestmenge für Kraftstoff im Kraftstofftank,
▪ Ausgeben einer Meldung zur Signalisierung der Unterschreitung der Mindestkraftstoffmenge im Kraftstofftank, und
▪ manuelles und/oder automatisches Aktivieren eines Kraftstoffsparmodus bei Unterschreiten der vorgegebenen Mindestmenge im Kraftstofftank.

2. Verfahren nach Anspruch 1, **dadurch gekennzeichnet, dass** der Kraftstoffsparmodus das Reduzieren der Klimaanlagenleistung und/oder das Schließen der Fenster und/oder das Deaktivieren von elektrischen Verbrauchern und/oder das Reduzieren der Antriebsleistung des Verbrennungsmotors umfasst.

3. Verfahren nach einem der vorhergehenden Ansprüche, **dadurch gekennzeichne**t, **dass** durch eine Rückmeldung des Fahrers das Aktivieren des Kraftstoffsparmodus dauerhaft oder über einen vorgebbaren Zeitraum unterdrückt wird.

4. Verfahren nach einem der vorhergehenden Ansprüche, **dadurch gekennzeichnet, dass** das Kraftfahrzeug beim Aktivieren des Kraftstoffmodus automatisch in die verbrauchsgünstigste Betriebsart überführt wird, wobei die Fahrwerksabstimmung und/oder die Schaltcharakteristik des Getriebes und/oder die Kennlinie des Gaspedals und/oder die Leistungsentfaltung des Verbrennungsmotors angepasst werden.

5. Verfahren nach einem der vorhergehenden Ansprüche, **dadurch gekennzeichnet, dass** nach Aktivierung des Kraftstoffsparmodus ein teilautonomer Fahrbetrieb aktiviert wird, wobei insbesondere das Beschleunigen und das Abbremsen vom Kraftfahrzeug vorgegeben werden.

6. Verfahren nach einem der vorhergehenden Ansprüche, **dadurch gekennzeichnet, dass** die in einem Navigationsgerät ausgewählte Route beim Aktivieren des Kraftstoffsparmodus automatisch derart angepasst wird, dass die verbrauchsgünstigste Route gewählt wird.

7. Verfahren nach einem der vorhergehenden Ansprüche, **dadurch gekennzeichnet, dass** in eine im Navigationsgerät gewählte Fahrroute beim Aktivieren des Kraftstoffsparmodus automatisch die nächstgelegene Tankstelle integriert wird oder als optionale Empfehlung ausgegeben wird.

8. Verfahren nach einem der vorhergehenden Ansprüche, **dadurch gekennzeichnet, dass** der Kraftsparmodus nach einer vorgebbaren Anzahl von manuellen Unterdrückungen durch den Fahrer beim Erreichen einer zweiten vorgebbaren Kraftstoffrestmenge im Kraftstofftank automatisch aktiviert wird.
